# EUROPEAN PATENT APPLICATION

(11) **EP 2 498 365 A1**
(43) Date of publication of application: **12.09.2012**
(21) Application number: 10827977.9
(22) Date of filing: 28.10.2010
(51) Int. Cl.: H02J 3/46, G06Q 50/00, H02J 3/00, H02J 3/32

(54) **ELECTRIC POWER INTERCHANGE SYSTEM**

(30) Priority: 06.11.2009 JP 2009255405
(71) Applicant: Panasonic Corporation, Kadoma-shi Osaka 571-8501 (JP)
(72) Inventor: KOSHIN, Hiroaki, Osaka 540-6207 (JP); YOSHITAKE, Akira, Osaka 540-6207 (JP); IWAMATSU, Yuusuke, Osaka 540-6207 (JP); KAWAGUCHI, Kei, Osaka 540-6207 (JP); KAWASAKI, Takuma, Osaka 540-6207 (JP)
(74) Representative: Haydn, Christian
(86) International application number: PCT/IB2010/002744
(87) International publication number: WO 2011/055194

(57) **Abstract**

In a power interchange system, an electric power generated by a power generation device is interchanged between power consuming dwellings in a multi-family house. Each power consuming dwelling generates the power by using the power generation device and receives a commercial AC power supply via a shared power supply wiring. The amount of electric power supplied to each power consuming dwelling is managed by a power management device. The power management device manages a surplus power amount of one power consuming dwelling and a required electric power amount of another power consuming dwelling and supplies the surplus power from the former power consuming dwelling to the latter power consuming dwelling via the power supply wiring.

## Description

### Field of the Invention

The present invention relates to a power interchange system which allows an interchange of an electric power, which is generated by a power generation device, between power consuming dwellings in a multi-family house.

### Background of the Invention

In recent years, there is an increasing number of dwellings which generate respective electric powers by themselves with solar cells or fuel cells. However, there is a case where an amount of a power produced through the self-power generation exceeds an amount of a consumed electric power. In this case, a surplus power is discarded. Therefore, a technique for interchanging the surplus power between dwellings is suggested (e.g., Japanese patent application publication No. 2006-288162).

### Summary of the Invention

However, the power transmission between power consuming dwellings is performed through an electric wire through which a commercial AC power is transmitted, thus making it difficult to clearly identify a usage ratio between the amount of the commercial AC power and the amount of the electric power interchanged between the dwellings.

In view of the above, the present invention provides a power interchange system capable of clearly identifying a ratio between an amount of an electric power interchanged among power consuming dwellings and an amount of a commercial AC power for interchanging the electric power.

In accordance with an aspect of the present invention, there is provided a power interchange system for interchanging an electric power, which is generated by a power generation device, between power consuming dwellings in a multi-family house.

The respective power consuming dwellings generate respective electric powers by using the power generation devices and are supplied with a commercial AC power through a shared power supply wiring. An amount of an electric power supplied to each power consuming dwelling is managed by a power management device. Further, the power management device manages an amount of a surplus power of one power consuming dwelling and an amount of a required power of another power consuming dwelling and supplies the surplus power from the one power consuming dwelling to the another power consuming dwelling through the power supply wiring.

With such configuration, the power management device recognizes the surplus power amount of the one power consuming dwelling and the required power amount of another power consuming dwelling when the surplus power of the one power consuming dwelling is supplied to the another power consuming dwelling. Accordingly, a ratio between the amount of electric power traded between power consuming dwellings and the amount of commercial AC power used by each power consuming dwelling is clearly identified.

An amount of an electric power sold by each power consuming dwelling may be defined as a selling power amount, and an amount of an electric power required to be supplied from other power consuming dwellings to each power consuming dwelling is defined as a purchasing power amount.

Each of the power consuming dwellings preferably includes the power generation device for generating the electric power and a power control unit calculating the selling power amount based on the amount of the electric power generated by the power generation device and transmitting to and receiving from the power management device selling power amount information indicating the selling power amount and purchasing power amount information indicating the purchasing power amount.

The power management device may establish a trade in an electric power between the power consuming dwellings based on the selling power amount information and the purchasing power amount information; instruct a power consuming dwelling, which has transmitted the selling power amount information, to sell an electric power based on the established trade in the electric power; collect information on the amount of commercial AC power supplied from the power supply wiring to the multi-family house, the selling power amount of each power consuming dwelling, and the purchasing power amount of each power consuming dwelling; and calculate an electricity billing rate of each power consuming dwelling based on the amount of the commercial AC power, the selling power amount and the purchasing power amount.

When the electric power is traded between power consuming dwellings in the multi-family house, it is unfair on a power consuming dwelling selling the electric power, a power consuming dwelling purchasing the electric power, and a power consuming dwelling not involved in trading power to calculate the electricity bill of each power consuming dwelling proportionally to the amount of commercial AC power MC consumed by the power consuming dwelling. With such configuration, the power management device collects the information on the amount of the commercial AC power, the selling power amount of each power consuming dwelling, and the purchasing power amount of each power consuming dwelling and calculates the electricity bill of each power consuming dwelling based on the amount of commercial AC power MC, the selling power amount, and the purchasing power amount. That is, since the electricity bill of each dwelling is calculated based on the amount of commercial AC power, the selling power amount, and the purchasing power amount, the electricity bill can be shared fairly by the power consuming dwellings.

A current sensor detecting a flowing direction of the commercial AC power may be provided between a downstream wiring of the power supply wiring inside the multi-family house and an upstream wiring thereof outside the multi-family house 130. The power management device preferably distinguishes a used state of the commercial power from a non-used state of the commercial power, the non-used state of the commercial power being defined as a state in which the current sensor detects that there is no electric current flowing from the upstream wiring to the downstream wiring and the used state of the commercial power being defined as a state in which the current sensor detects that there is an electric current flowing from the upstream wiring to the downstream wiring. The power management device may set a difference between an electricity billing rate for an amount of an electric power used by each power consuming dwelling in the non-used state of the commercial power and an electricity billing rate for an amount of an electric power used by each power consuming dwelling in the used state of the commercial power.

The difference in the electricity bill between in the non-used state of commercial AC power and in the used state of commercial AC power is set to motivate the power consuming dwellings to determine in which state of the non-used state and the used state of the commercial AC power they consume a greater amount of power.

The power generation device preferably include a variety of kinds of power generation devices, and the power management device may manage the selling power amount by distinguishing which of the power generation devices are used to generate the electric power.

With such configuration, since the selling powers of power consuming dwellings are differently managed based on power generation devices that produce the selling powers, information can be processed based on the kind of the power generation device which generates the selling power. For example, a power consuming dwelling purchasing a selling power can be provided with information on the kind of a power generation device which produced the selling power, or a different price of the power can be set depending on the kind of the power generation device.

The electricity billing rate is preferably changed depending on the kind of a power generation device that is a power source of the electric power sold when calculating the electricity bill of each power consuming dwelling based on the amount of the commercial AC power, the selling power amount, and the purchasing power amount.

Accordingly, since the electricity billing rate is set to a different value depending on the kind of an electricity generation source of the selling power, the power consuming dwelling can actively use power from an electricity generation source providing a lower price than the other electricity generation sources.

Each of the power consuming dwellings further includes a display unit displaying an electricity billing rate for the commercial AC power and an electricity billing rate for the trade in the electric power.

With such configuration, the electricity billing rate for the commercial AC power and for the trade in the electric power is displayed to the power consuming dwellings. The power consuming dwellings can compare the electricity billing rate for the commercial AC power with that for the power trade to determine whether to use the commercial AC power or to trade the electric power.

The power generation device may be shared by the power consuming dwellings.

Each of the power consuming dwellings includes a storage battery charged with an electric power distributed from the power generation device and a battery charger charging the storage battery with the electric power from the power generation device and transmitting charging information for a charging control to the power management device.

The power management device may manage the amount of the electric power distributed from the power generation device to the storage battery of each power consuming dwelling based on the charging information from the battery charger.

With such configuration, since the power management device manages the amount of the electric power distributed from the power generation device to the storage battery of each power consuming dwelling, the amount of power distributed to each power consuming dwelling is clarified. Thus, a ratio between the amount of power distributed to each power consuming dwelling and the amount of commercial AC power used by each power consuming dwelling is clearly identified.

An amount of an electric power sold by each power consuming dwelling may be defined as a selling power amount, and an amount of an electric power required to be supplied from other power consuming dwellings to each power consuming dwelling may be defined as a purchasing power amount.

Each of the power consuming dwellings includes a power control unit calculating the selling power amount based on the amount of the electric power accumulated in the storage battery and transmitting to and receiving from the power management device selling power amount information indicating the selling power amount and purchasing power amount information indicating the purchasing power amount.

The power management device preferably manages a charging level that is the charging information from the battery charger, the selling power amount and the purchasing power amount from the power control unit.

Accordingly, since the power management device manages the charging level of a battery charger of each power consuming dwelling and the selling power amount and the purchasing power amount thereof, it is possible to control the amount of power distributed to each power consuming dwelling based on such information.

A charging allowance condition determining whether or not to allow charging from the power generation device is set to the storage battery of each power consuming dwelling, and the power management device allows the storage battery to be charged when the storage battery of the power consuming dwelling satisfies the charging allowance condition.

With such configuration, a storage battery of each power consuming dwelling which satisfies the charging allowance condition is allowed to be charged, whereas a storage battery which does not satisfy the charging allowance condition is not allowed to be charged. That is, the power generated by a power generation device is not evenly distributed to the storage batteries of power consuming dwellings but distributed only to storage batteries which satisfy the respective charging allowance conditions. Accordingly, as compared with when the generated power is uniformly distributed, unnecessary distribution of the power to a storage which does not need charging is prevented.

A selling allowance condition determining whether or not to allow selling the electric power from the storage battery to the power supply wiring may be set to the storage battery of each power consuming dwelling, and the power management device preferably allows selling the electric power from the storage battery when the corresponding storage battery of the power consuming dwelling satisfies the selling allowance condition.

Accordingly, selling power is allowed from the storage battery which satisfies the selling allowance condition among the storage batteries of power consuming dwellings, whereas selling power is not allowed from the storage battery which does not satisfy the selling allowance condition. In this way, the sale of powers from the storage batteries of the power consuming dwellings is managed, so that the charging levels of the storage batteries of the power consuming dwellings are properly identified.

The power management device may manage the numbers of charging and discharging of the storage battery of each power consuming dwelling and calculate a life span of the storage battery based on the numbers of the charging and discharging.

The abrasion of a storage battery depends on how much it is used. With such configuration, the power management device manages the numbers of the charging and discharging of the storage battery of each power consuming dwelling and calculates the life span of the storage battery, thus recognizing how much the storage battery is worn out.

The power management device preferably establishes a trade in an electric power between power consuming dwellings based on the selling power amount information and the purchasing power amount information; instructs a power consuming dwelling, which has transmitted the selling power amount information, to sell an electric power based on the established trade in the electric power; collects information on the amount of commercial AC power supplied from the power supply wiring to the multi-family house, the selling power amount of each power consuming dwelling, and the purchasing power amount of each power consuming dwelling; and calculates an electricity billing rate of each power consuming dwelling based on the amount of the commercial AC power, the selling power amount, and the purchasing power amount.

There is a difference in the charged amount of power between the storage batteries of the power consuming dwelling s. Thus, even though a power from a shared power generation device is uniformly distributed, the power may not be effectively utilized. However, with such configuration, since the trade in the electric power enables the power accumulated in the storage battery of one power consuming dwelling to be re-distributed to another power consuming dwelling, electric power is effectively used. Further, since the electricity bill of each power consuming dwelling is calculated based on the amount of commercial AC power, the selling power amount, and the purchasing power amount, a power consuming dwelling of a selling side can make a profit. Accordingly, re-distribution of electric power can be promoted.

### Brief Description of the Drawings

The objects and features of the present invention will b ecome apparent from the following description of preferred em bodiments given in conjunction with the accompanying drawings, in which:
Fig. 1 is a block diagram showing a schematic configuration of a power interchange system in accordance with a first embodiment of the present invention;
Fig. 2 is a block diagram showing a schematic configuration of a power supply system of a dwelling in accordance with the first embodiment;
Fig. 3 is a table showing a selling power amount and a purchasing power amount of each dwelling, and a relationship in a trade between dwellings in accordance with the first embodiment;
Figs. 4A and 4B show a balance of electric power of a power supply wiring of the power interchange system in accordance with the first embodiment, wherein Fig. 4A is a schematic view showing an input and an output of electric power to and from the power supply wiring, and Fig. 4B is a graph showing a relationship between an amount of input power and an amount of output power;
Fig. 5 is a flowchart showing an individual billing process performed by a control unit in accordance with the first embodiment;
Fig. 6 is a table showing a relationship between a power generation device and a set price of electric power in accordance with the first embodiment;
Fig. 7 is a graph showing a relationship between a selling power amount from a solar cell, a selling power amount from a fuel cell, an amount of commercial AC power, and a purchasing price in a power interchange system in accordance with the first embodiment;
Fig. 8 is a graph showing a relationship between a selling power amount from the solar cell, a selling power amount from the fuel cell, a purchasing power amount, and an individual bill as to a single dwelling in accordance the first embodiment;
Fig. 9 is a block diagram showing a schematic configuration of a power interchange system in accordance with a second embodiment of the present invention; and
Fig. 10 is a graph showing a relationship between an amount of solar cell power, a charging level of a dwelling D, a charging level of a dwelling E, and an amount of power distributed to each dwelling in a power interchange system in accordance with the second embodiment.

### Detailed Description of the Embodiments

Hereinafter, embodiments of the present invention will be described with reference to the accompanying drawings which form a part hereof. Throughout the drawings, like reference numerals will be given to like parts, and redundant description thereof will be omitted.

### (First Embodiment)

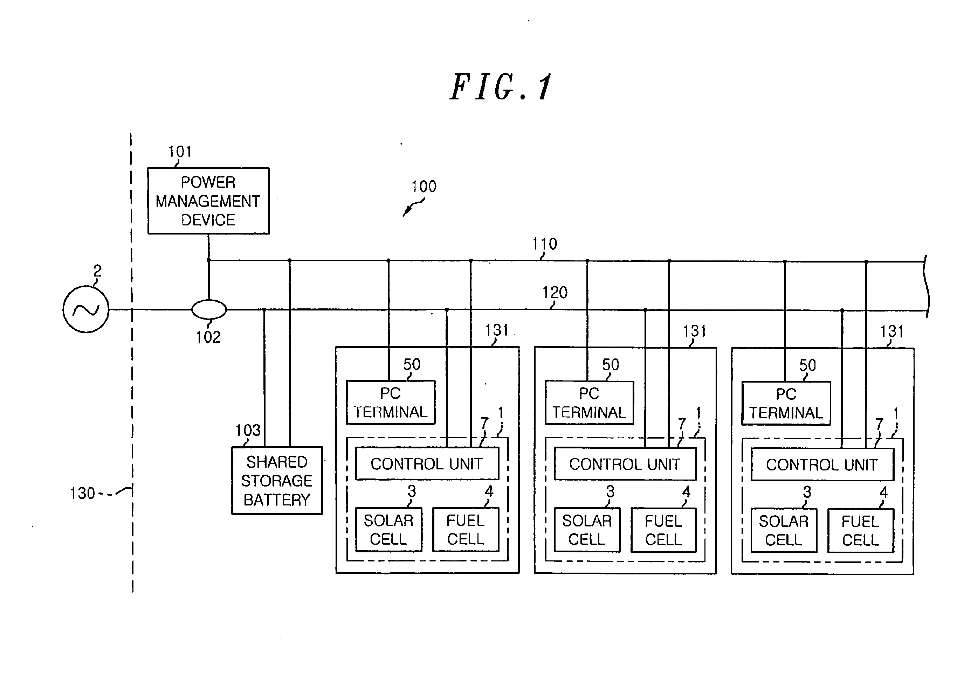

A first embodiment of the present invention will be described with reference to Figs. 1 to 8.

As shown in Fig. 1, a multi-family house 130, such as a mansion, is provided with a power supply wiring 120. The power supply wiring 120 is connected to a commercial AC (Alternating Current) power source 2.

A power interchange system 100 in accordance with the first embodiment includes the power supply wiring 120 for supplying an electric power to each dwelling 131 and a power management device 101 managing power supply to the dwellings 131. A shared storage battery 103 is provided at a basic portion of the power supply wiring 120. A current sensor 102 is provided upstream from the shared storage battery 103 between a downstream wiring 122 of the power supply wiring 120 provided inside the multi-family house 130 and an upstream wiring 121 thereof provided outside the multi-family house 130.

The current sensor 102 detects the direction of an electric current. when the current sensor 102 detects an adverse current that is flowing from the multi-family house 130 to the commercial AC power source 2, a corresponding amount of an electric power to the adverse current is accumulated in the shared storage battery 103 from that point. Further, the accumulated electric power is discharged to be supplied to the power supply wiring 120, e.g., when the current sensor 102 detects a current flowing from the commercial AC power source 2 to the multi-family house 130.

The power management device 101, the shared storage battery 103, and the current sensor 102 are connected to an information network 110. A dwelling 131 is provided with a PC terminal 50 connected to the information network 110 and a power supply system 1 controlling the electric power in the dwelling 131.

The power supply system 1 supplies an electric power to a variety of electrical devices (such as an illuminating device, an air conditioner, a home appliance, an audio/video device and the like). The power supply system 1 supplies an electric power from a solar cell 3 generating the electric power with the sunlight or an electric power from a fuel cell 4 generating the electric power with fuel in addition to supplying an electric power from a commercial AC source (AC power source) 2 for home use to operate various kinds of electrical devices.

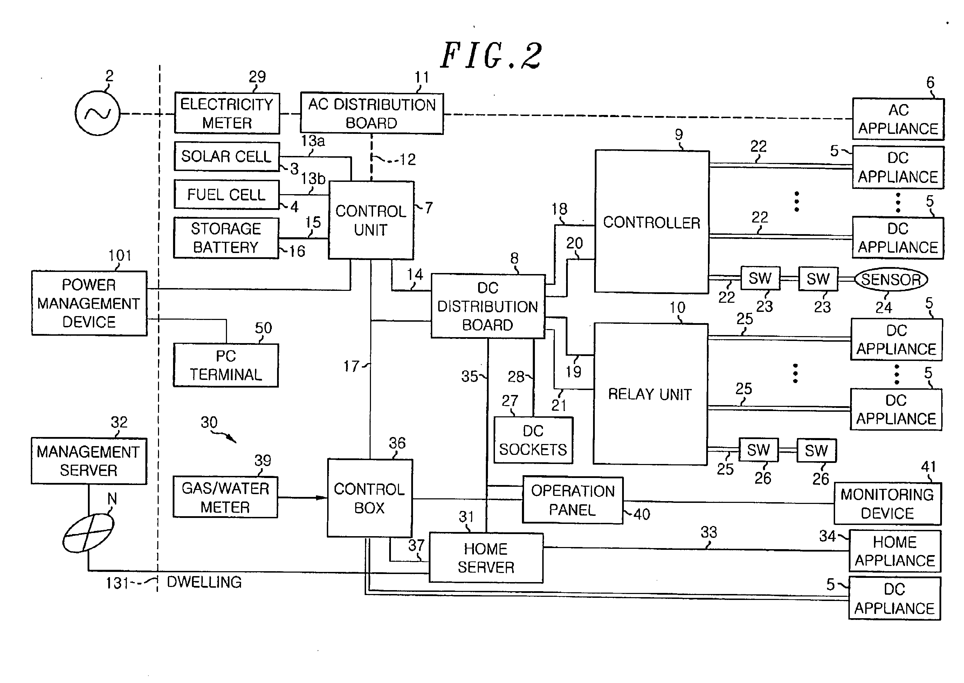

The power supply system 1 is described with reference to Fig. 2.

The power supply system 1 supplies the electric power to not only DC appliances 5 operated with a DC power inputted from a DC power supply but also an AC appliance 6 operated with an AC power inputted from the commercial AC power source 2. The power supply system 1 is provided with a control unit 7 and a DC distribution board 8 (in which a DC breaker is arranged). The power supply system 1 is further provided with a controller 9 and a relay unit 10 for controlling operations of the DC appliances 5 installed in the dwelling.

An AC distribution board 11 for dividing an AC power is connected to the control unit 7 through an AC power line 12. The control unit 7 is connected to the commercial AC power source 2 via the AC distribution board 11, is connected to the solar cell 3 through a DC power line 13a, and is connected to the fuel cell 4 through a DC power line 13b. The control unit 7 receives an AC power from the AC distribution board 11 and converts the AC power to a specific DC power. Further, the control unit 7 receives DC powers from the solar cell 3 and the fuel cell 4 and converts the DC powers to a specific DC power. The control unit 7 outputs the converted DC power to the DC distribution board 8 through a DC power line 14 and to the storage battery 16 through a DC power line 15. Furthermore, the control unit 7 converts the DC powers from the solar cell 3, the fuel cell 4, and the storage battery 16 to an AC power by a grid connected inverter and supplies the power to the AC appliance 6 through the AC distribution board 11 or discharges the power through the power supply wiring 120. In addition, the control unit 7 exchanges data with the DC distribution board 8 through a signal line 17.

The DC distribution board 8 is a kind of breaker for the DC power. The DC distribution board 8 divides the DC power inputted from the control unit 7 and outputs the divided DC powers to the controller 9 through a DC power line 18 and/or to the relay unit 10 through a DC power line 19. The DC distribution board 8 exchanges data with the controller 9 through a signal line 20 or with the relay unit 10 through a signal line 21.

The controller 9 is connected with a plurality of DC appliances 5. The DC appliances 5 are connected to the controller 9 through DC supply lines 22, each of which is capable of carrying both DC power and data. Each of the DC supply lines 22 transmits both power and data to a corresponding DC appliance 5 over a pair of lines using, e.g., power line communications (PLC) that overlap communications signals for transmitting data via a highfrequency transmission wave with the DC power to be supplied to the DC appliance 5. The controller 9 receives a DC power for the DC appliances 5 through the DC power line 18 and detects operating control status of the DC appliances 5 based on an operation instruction obtained from the DC distribution board 8 through the signal line 20. Then, the controller 9 outputs the DC power and an operation instruction to a designated DC appliance 5 through the corresponding DC supply lines 22, thereby controlling the operations of the DC appliance 5.

Switches 23 that are manipulated when the operations of the DC appliances 5 are switched over are connected to the controller 9 through a DC supply line 22. In addition, a sensor 24 for detecting radio waves transmitted from, e.g., an infrared remote controller, is connected to the controller 9 through the DC supply line 22. Accordingly, the DC appliances 5 are controlled by transmitting communications signals through the DC supply lines 22 in response not only to the operation instruction from the DC distribution board 8 but also to the manipulation of the switches 23 or the detection of the sensor 24.

The relay unit 10 is connected with the plurality of DC appliances 5 through individual DC power lines 25. The relay unit 10 obtains a DC power for the DC appliances 5 through a DC power line 19, and determines which of the DC appliances 5 is to be operated based on an operation instruction obtained from the DC distribution board 8 through the signal line 21. Further, the relay unit 10 controls the operations of the DC appliances 5 determined to be operated in such a way to have relays built therein to turn on and off the supply of powers to the DC power lines 25. Switches 26 for manually operating the DC appliances 5 are connected to the relay unit 10, and thus, the DC appliances 5 are controlled by manually manipulating the switches 26 to have the relays to turn on or off the supply of powers to the DC power lines 25.

A DC socket 27 installed in the dwelling in a form of, e.g., a wall socket or a floor socket, is connected to the DC distribution board 8 through a DC power line 28. When a plug (not shown) of the DC appliance 5 is inserted into the DC socket 27, it is possible to directly supply the DC power to the DC appliance 5.

An electricity meter 29 capable of remotely measuring, e.g., an amount of a consumed power from the commercial AC power source 2 is connected to the AC distribution board 11. The electricity meter 29 has not only a function of remotely measuring the amount of the consumed power from the commercial AC power source 2 but also, e.g., a power line communications function or a wireless communications function. The electricity meter 29 transmits measurement results to an electric power company or the like through power line communications or wireless communications.

The power supply system 1 is provided with a network system 30 that enables various kinds of home appliances to be controlled through network communications. The network system 30 includes a home server 31 that functions as a controller thereof. The home server 31 is connected to an external home management server 32 via a network N such as the Internet and is also connected to a home appliance 34 through a signal line 33. The home server 31 is operated by a DC power supplied from the DC distribution board 8 through a DC power line 35.

A control box 36 for managing the operational control of various kinds of home appliances through network communications is connected to the home server 31 through a signal line 37. The control box 36 is connected to the control unit 7 and the DC distribution board 8 through the signal line 17. The control box 36 directly controls the DC appliances 5 through a DC supply line 38. A gas/water meter 39 capable of remotely measuring, e.g., the amounts of gas and tap water used, is connected to the control box 36 which is connected to an operation panel 40 of the network system 30. A monitoring device 41 including, e.g., a door phone outdoor unit, a sensor or a camera is connected to the operation panel 40.

When operation instructions to operate the various kinds of home appliances are inputted through the network N, the home server 31 notifies the control box 36 of the operation instructions and operates the control box 36 so that the home appliances can be operated based on the operation instructions. Moreover, the home server 31 can provide various kinds of information obtained from the gas/water meter 39 to the management server 32 through the network N. When an abnormality detected by the monitoring device 41 is notified to the home server 31 through the operation panel 40, the home server 31 provides the information on the detected abnormality to the management server 32 through the network N.

Here, the control unit 7 will be described in detail. The control unit 7 manages an amount of commercial AC power MC supplied through the AC power line 12, an amount of photovoltaic power MA generated by the solar cell 3, an amount of fuel power MB generated by the fuel cell 4, and a level of the electric power accumulated ("charging level CL") in the storage battery 16. The control unit 7 changes a power supply source for power supply to the AC appliance 6 or the DC appliances 5 based on the amount of the commercial AC power MC, the amount of the photovoltaic power MA, the amount of the fuel power MB, and the charging level CL. For example, the control unit 7 performs a power control as follows.

When a total amount of consumed power MR by the DC appliances 5 and the AC appliance 6 is smaller than the amount of the photovoltaic power MA and thus there is a surplus amount of the photovoltaic power MA, the control unit 7 accumulates the surplus amount of the photovoltaic power MA into the storage battery 16. When the storage battery 16 is fully charged, the control unit 7 stops the storage battery 16 from being charged. When the amount of the photovoltaic power MA is smaller than the total amount of the consumed power MR, the control unit 7 supplies an electric power from the storage battery 16 to the AC appliance 6 or the DC appliances 5. When the charging level CL of the storage battery 16 decreases to a predetermined threshold level, the control unit 7 stops the supply of the electric power from the storage battery 16 to the AC appliance 6 or the DC appliances 5. The threshold level is set in the storage battery 16 to prepare an electric power for emergency, such as a blackout.

When the total amount of consumed power MR by the AC appliance 6 exceeds a predefined maximum level, the control unit 7 blocks the supply of AC power by the AC distribution board 11. Likewise, when the total amount of power consumed MR by the DC appliances 5 exceeds a predefined maximum level, the control unit 7 blocks the supply of DC power by the DC distribution board 8.

Further, the control unit 7 manages the amount of consumed power MR, the amount of the commercial AC power MC from the commercial AC power source 2, the amount of the fuel power MB, the amount of the photovoltaic power MA, and the charging level CL of the battery 16. Also, the control unit 7 calculates an amount of an electric power which can be sold (hereinafter, referred to as "the amount of selling power MS") based on the above amounts. For example, the amount of selling power MS is calculated as several tens percent of a difference between the amount of the fuel power MB and the amount of the photovoltaic power MA, and the amount of consumed power MR consumed by the appliances 5 and 6. The control unit 7 calculates the amount of required power (hereinafter, referred to as "the amount of purchasing power MT").

Also, the control unit 7 transmits information on the amount of selling power MS (hereinafter, referred to as "selling power amount information") and information on the amount of purchasing power MT (hereinafter, referred to as "purchasing power amount information") to the power management device 101. In addition, the control unit 7 transmits information on the kind of a power generation device which has generated the power associated with the amount of selling power MS along with the selling power amount information and the purchasing power amount information. For example, when the amount of the selling power MS is from the photovoltaic generation, it is transmitted as an amount of selling power from the solar cell MSX. On the other hand, when the amount of the selling power MS is from the fuel generation, it is transmitted as an amount of selling power from the fuel cell MSY.

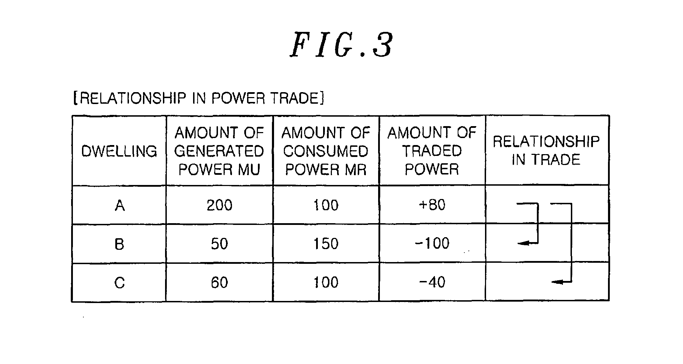

Referring to Fig. 3, a power trade control performed by the power management device 101 is described. Here, the amounts of the electric power traded between dwellings A, B, and C are illustrated. The dwelling A has a surplus of photovoltaic power MA or a surplus of fuel power MB, whereas the dwellings B and C exhaust the photovoltaic power MA and the fuel power MB and thus are supplied with an electric power from the commercial AC power source 2. In Fig. 3, the table shows the amounts of generated power MU, consumed power MR, and traded power by each dwelling 131 for a specified period of time, and the relationship in a trade between dwellings 131. The amount of generated power MU includes the total amount of the photovoltaic power MA and the fuel power MB. The amount of selling power MS is indicated by (+) in front of the amount of a traded electric power, while the amount of purchasing power MT is indicated by (-) in front of the amount of the traded power.

The power management device 101 matches trade partners based on the data listed in the table of Fig. 3. For example, the power management device 101 establishes a trade in an electric power between all sellers and all buyers, and the sellers' selling power MS is distributed to the buyers. Such trade in an electric power is performed every predetermined period.

In the case as in the table shown in Fig. 3, the power management device 101 establishes a trade in an electric power between the dwellings A and B and a trade in an electric power between the dwellings A and C. When the trade in an electric power is established, an instruction to discharge an electric power is sent to a seller. The dwelling A discharges the selling power MS through the power supply wiring 120. Accordingly, the selling power MS flows through each dwelling 131 connected to the power supply wiring 120. Although the destination of the selling power MS is not determined, the selling power MS from the dwelling A is considered to be distributed to the dwellings B and C in the record of the power management device 101 on the management of the power amount of each dwelling 131. However, the dwellings B and C have power shortages even though receiving the selling power MS. The power shortages can be made up by purchasing power from the commercial AC power source 2.

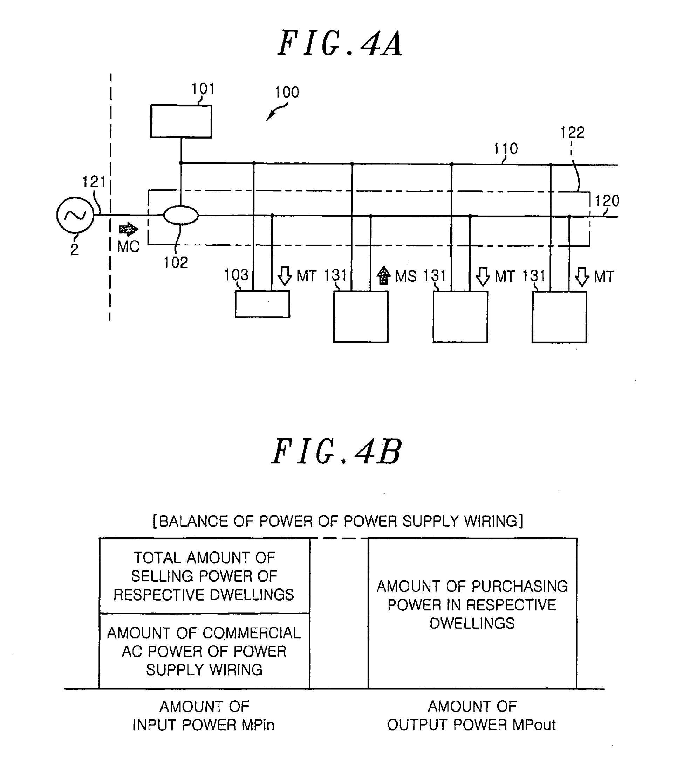

Referring to Figs. 4A and 4B, the relationship between the input and the output of an electric power to and from the power supply wiring 120 will be described.

As shown in Fig. 4A, the amount of input power MPin to the power supply wiring 120 is the sum of the total amount of selling powers MS from the respective dwellings 131 and the amount of commercial AC power MC supplied from the commercial AC power source 2 to the power supply wiring 120. The amount of output power MPout from the power supply wiring 120 is the total amount of purchasing powers MT purchased by the respective dwellings 131. As shown in Fig. 4B, when the amount of the input power MPin to the power supply wiring 120 is equivalent to the amount of the output power MPout from the power supply wiring 120, the balance of the electric power is maintained. Based on this, the amount of the electric power inputted to the power supply wiring 120 and that outputted therefrom, a buyer and a seller engaged in the electric power trade, and the amount of traded electric power are managed, thereby establishing the trade in an electric power between dwellings without confusing the amount of commercial AC power MC and the amount of traded electric power.

The selling power MS is generated by the solar cell 3 or the fuel cell 4 and brings added value to the environment as compared with commercial AC power. Thus, a reasonable price is charged for the selling power distinguished from the commercial AC power.

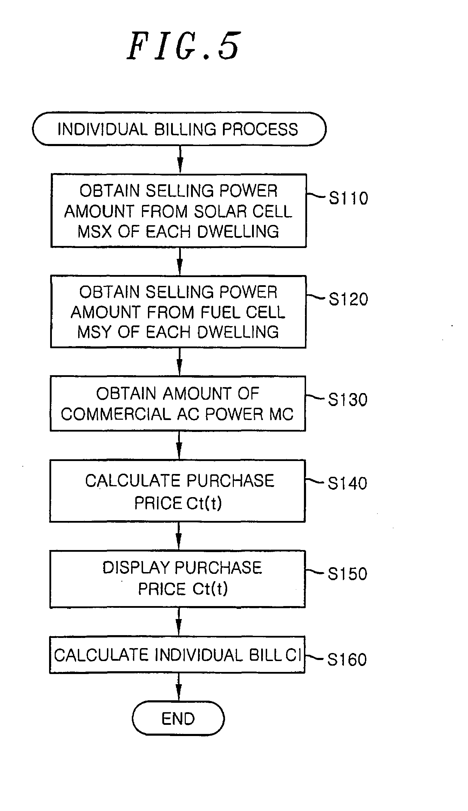

Referring to Fig. 5, an individual billing process performed by the power management device 101 will be described in detail. The billing process is carried out every predetermined period.

First, in step S110, the amount of selling power from the solar cell MSX is obtained from each dwelling 131. In step S120, the amount of selling power from the fuel cell MSY is obtained from each dwelling 131. In step S130, the amount of commercial AC power MC flowing into the power supply wiring 120 is obtained.

Subsequently, in step S140, the purchasing price Ct is set based on the amount of selling power from the solar cell MSX, the amount of selling power from the fuel cell MSY, and the amount of commercial AC power MC. In step S150, the purchasing price Ct is transmitted to each dwelling 131 and displayed on the PC terminal 50 of each dwelling 131. In step S160, an individual bill of each dwelling 131 is calculated.

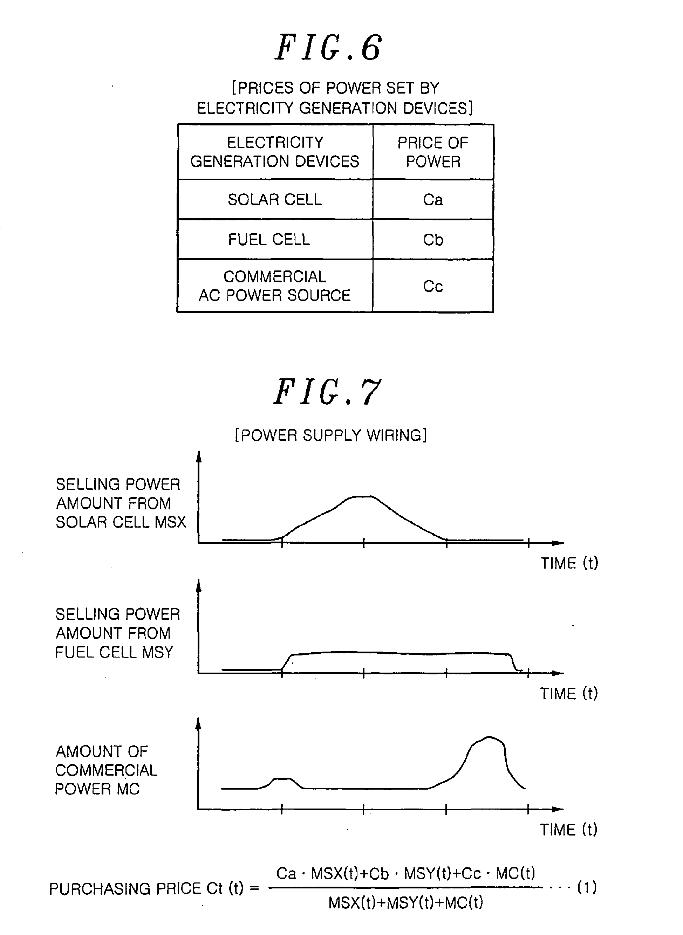

Fig. 6 shows prices of an electric power set by the power generation devices.

The price of selling power from the solar cell MSX is set to be lower than the price of selling power from the fuel cell MSY. The price of the selling power from the fuel cell MSY is set to be lower than the price of power from the commercial AC power source. That is, the prices are set to motivate a buyer to purchase the selling power from the solar cell MSX or the selling power from the fuel cell MSY rather than the commercial AC power MC, by comparing the selling power from the solar cell MSX and the selling power from the fuel cell MSY with the commercial AC power MC. Further, a buyer is motivated to purchase the selling power from the solar cell MSX rather than the selling power from the fuel cell MSY, by comparing the selling power from the solar cell MSX with the selling power from the fuel cell MSY.

Further, the prices of the electric powers based on the power generation devices may be set as follows.

A case of used state of the commercial electric power supplied to the multi-family house 130 is distinguished from a case of a non-used state thereof, and then the price of the electric power is set to a different level in each case. For example, the prices of the electric powers from the solar cell and the fuel cell are set to be lower in the non-used state of the commercial electric power than those in the used state of the commercial electric power. The non-used state of the commercial electric power is defined as a state when the current sensor 102 detects that there is no electric power flowing from the upstream wiring 121 to the downstream wiring 122. The used state of the commercial electric power is defined as a state when the current sensor 102 detects that there is an electric power flowing from the upstream wiring 121 to the downstream wiring 122.

Referring to Fig. 7, a method of calculating the purchasing price Ct of the electric power will be described. The graphs in Fig. 7 show the amount of selling power from the solar cell MSX flowing into the power supply wiring 120, the amount of selling power from the fuel cell MSY flowing thereinto, and the amount of commercial AC power MC from the commercial AC power source 2 flowing thereinto. The amount of selling power from the solar cell MSX denotes the total amount of selling powers from the solar cells MSX of the respective dwellings. The amount of selling power from the fuel cell MSY denotes the total amount of selling powers from the fuel cells MSY in the respective dwellings. The amount of commercial AC power MC denotes the amount of the power supplied from the commercial AC power source 2 to the multi-family house 130.

The amount of selling power from the solar cell MSX increases during the daytime. The amount of selling power from the fuel cell MSY is nearly constant from the daytime to the night. The amount of commercial AC power MC increases at dawn and at night. In this way, the amounts of the electric powers by the respective power generation devices change with time.

The power flowing into the power supply wiring 120 is distributed to the respective dwellings 131. Thus, the purchasing price Ct is calculated as a weighted average of the amounts of the electric powers by the various power generation devices flowing into the power supply wiring 120, as in Equation 1 of Fig. 7.

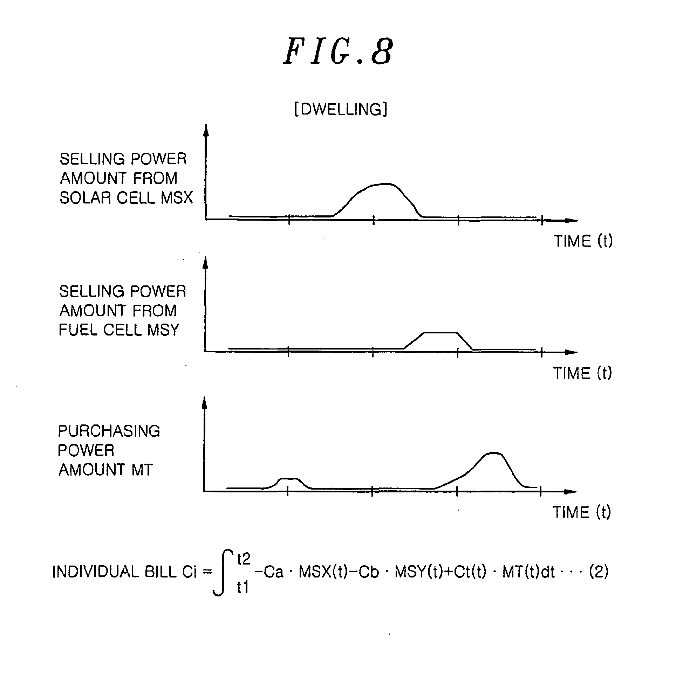

Referring to Fig. 8, a method of calculating an individual bill paid by each dwelling 131 will be described. Fig. 8 shows the amount of selling power from the solar cell MSX, the amount of selling power from the fuel cell MSY, and the amount of purchasing power MT from the power supply wiring 120 in a single dwelling for one day.

In Fig. 8, the dwelling 131 sells a surplus of the electric power generated from the solar cell 3 or the fuel cell 4 as the selling power MS. The amount of selling power from the solar cell MSX increases in the daytime. The amount of selling power from the fuel cell MSY increases through the evening. The amount of purchasing power MT from the power supply wiring 120 increases at dawn and at night.

Since a seller makes a profit when the selling power MS is sold to another dwelling 131, the selling power is a minus portion in the individual bill. Meanwhile, since purchasing power MT is purchased when there occurs a shortage of an electric power, it is a plus portion in the individual bill. That is, the individual bill per day is calculated by Equation 2 in Fig. 8.

The power interchange system 100 in accordance with the first embodiment provides the following effects.
(1) In the present embodiment, the amount of the electric power supplied to each dwelling 131 is managed by the power management device 101. The power management device 101 manages the amount of the selling power MS of one dwelling 131 corresponding to the amount of surplus power and the amount of purchasing power MT of another dwelling 131 and sells the selling power MS of the one dwelling 131 to the another dwelling 131 through the power supply wiring 120.

With such configuration, the power management device 101 manages the amount of selling power MS of one dwelling 131 and the amount of purchasing power MT of another dwelling 131 and supplies the selling power MS of the one dwelling 131 to the another power consuming dwelling. Accordingly, a ratio between the amount of the electric power traded between the dwellings 131 and the amount of commercial AC power MC used by each dwelling 131 can be clarified.
(2) The control unit 7 calculates the amount of selling power MS based on the amount of the electric powers generated from the power generation devices and transmits to and receives from the power management device 101 selling power amount information indicating the amount of selling power MS and purchasing power amount information indicating the amount of purchasing power MT. The power management device 101 establishes a trade in an electric power between dwellings 131 based on the selling power amount information and the purchasing power amount information from the control unit 7 and thus instructs a seller of a dwelling 131 to sell power. Further, the power management device 101 collects information on the amount of commercial AC power MC supplied from the power supply wiring 120 to the multi-family house 130, the amount of the selling power MS of each dwelling 131, and the amount of the purchasing power MT of each dwelling 131 and calculates the electricity bill of each dwelling 131 based on the amount of commercial AC power MC, the amount of the selling power MS, and the amount of the purchasing power MT.

When the power is traded between dwellings 131, it is unfair on a dwelling 131 selling power, a dwelling 131 purchasing power, and a dwelling 131 not involved in trading power to calculate the electricity bill of each dwelling 131 proportionally to the amount of commercial AC power MC consumed by the dwelling 131. with such configuration, the power management device 101 collects the information on the amount of commercial AC power MC, the amount of selling power MS of each dwelling 131, and the amount of purchasing power MT of each dwelling 131 and calculates the electricity bill of each dwelling 131 based on the amount of commercial AC power MC, the amount of selling power MS, and the amount of purchasing power MT. That is, since the electricity bill of each dwelling 131 is calculated based on the amount of commercial AC power MC, the amount of selling power MS, and the amount of purchasing power MT, the electricity bill can be calculated fairly by the dwellings 131.
(3) In the present embodiment, the current sensor 102 for detecting the flowing direction of commercial AC power is provided between the downstream wiring 122 of the power supply wiring 120 provided inside the multi-family house 130 and the upstream wiring 121 thereof provided outside the multi-family house 130. The power management device 101 distinguishes the non-used state of the commercial AC power from the used state of the commercial AC power and sets the electricity billing rate on the amount of the electric power used by each dwelling 131 in the non-used state of the commercial AC power to be different from the electricity billing rate on the amount of the electric power used by each dwelling 131 in the used state of the commercial AC power.

In accordance with the present invention, the set difference in the electricity billing rate between in the non-used state of the commercial AC power and in the used state of the commercial AC power can serve to motivate the dwellings 131 to determine in which state of the non-used state and the used state of the commercial AC power they consume a greater amount of an electric power.
(4) In the present embodiment, the power generation devices include two types of power generation devices, that is, the solar cell 3 and the fuel cell 4. The power management device 101 differently manages selling power MS generated from the solar cell 3 and selling power MS generated from the fuel cell 4.

With such configuration, since the selling powers MS of each dwelling 131 generated from the solar cell 3 and from the fuel cell 4 are differently managed, information can be processed based on the kind of a power generation device which generates the selling power MS. For example, a dwelling 131 purchasing selling power MS can be provided with information on the kind of the power generation device which produced the selling power MS, or a different price of an electric power can be set depending on the kind of the power generation device.
(5) In the present embodiment, when calculating the electricity bill based on the amount of commercial AC power, the amount of selling power MS, and the amount of commercial AC power MC, the electricity bill is changed corresponding to the kind of a power generation device generating the selling power MS.

With such configuration, since the electricity billing rate is set to a different value depending on the kind of a power generation source of the selling power MS, the dwelling 131 can actively use an electric power from a power generation source providing a lower price than the other power generation sources.
(6) In the present embodiment, the dwellings 131 are equipped with the PC terminals 50 as a display unit presenting the electricity bills for commercial AC power and for trading an electric power. With such configuration, the electricity billing rates for a commercial AC power and for a traded electric power can be presented to the respective dwellings 131. Each dwelling 131 can compare the electricity billing rate for the commercial AC power with the electricity billing rate for the traded electric power and determine whether to use a commercial AC power or to trade an electric power.

### (Second Embodiment)

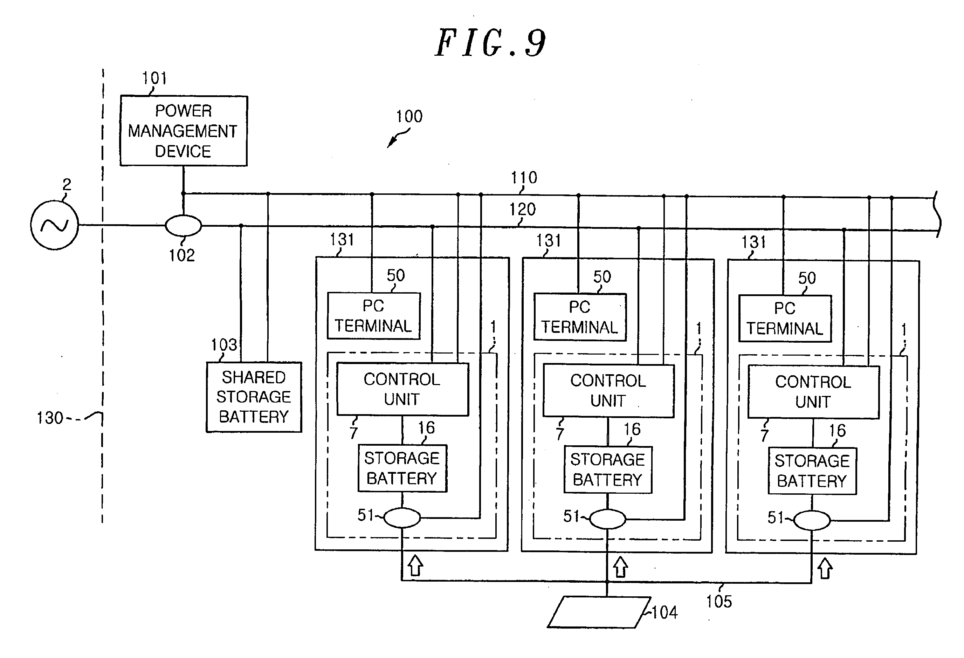

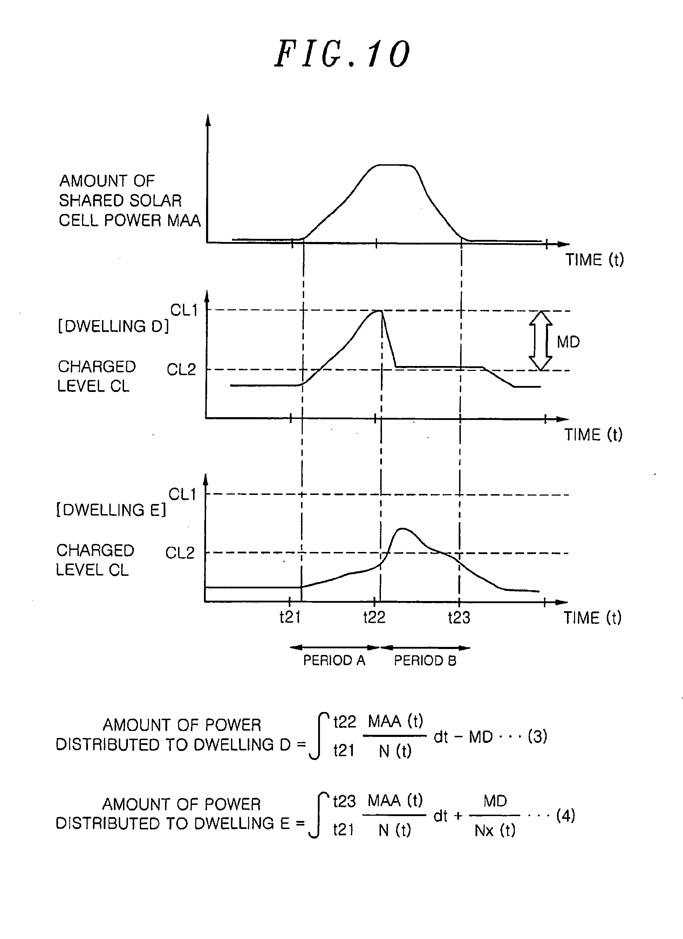

A second embodiment of the present invention will be described with reference to Figs. 9 and 10. A power interchange system 100 in accordance with the second embodiment further includes the following modification in addition to the configuration of the first embodiment. That is, each dwelling 131 generates an electric power by using the solar cell 3 and the fuel cell 4 in the first embodiment, while an electric power generated by a shared solar cell 104 provided in a multi-family house 130 is distributed to each dwelling 131 in the second embodiment. Hereinafter, changes from the configuration of the first embodiment due to the modification will be described in detail. Further, like reference numerals will be given to like parts, and redundant description thereof will be omitted.

As shown in Fig. 9, the multi-family house 130, such as a mansion, is provided with a power supply wiring 120 connected to a commercial AC power source 2. Each dwelling 131 in the mansion is supplied with an electric power through the power supply wiring 120. A storage battery 16 is provided with a battery charger 51 for charging with an electric power from the shared solar cell 104.

The storage batteries 16 of the respective dwellings 131 are connected to the shared solar cell 104 via the battery chargers 51. The respective battery chargers 51 are connected to the power management device 101 through an information network 110. The battery charger 51 transmits charging information to the power management device 101 and receives an instruction on charging from the power management device 101. Charging the storage batteries 16 with the electric power supplied from the shared solar cell 104 is controlled by the power management device 101. The power management device 101 starts charging the storage battery 16 of a specific dwelling 131 in accordance with an instruction for start of charging and stops charging the storage battery 16 in accordance with an instruction for stop of charging. The charging level CL of an electric power in the storage battery 16 of each dwelling 131 is managed by the power management device 101.

An electric power generated from the shared solar cell 104 (hereinafter, referred to as "shared solar cell power MAA") is distributed to the dwellings 131 through a DC power line 105. The supply of the shared solar cell power MMA to each dwelling 131 is started under a charging allowance condition set for each dwelling 131, and charging is stopped under a charging stop condition.

The charging allowance condition determines whether the charging level CL of the storage battery 16 is a charging allowance level which allows charging. The charging stop condition determines whether the charging level CL of the storage battery 16 is a charging stop level. The charging allowance level and the charging stop level are set to different values for the respective dwellings 131.

When the shared solar cell 104 starts generating an electric power, the state of the storage battery 16 of each dwelling 131 is checked and it is determined whether charging the storage battery 16 is possible based on the charging allowance condition. When a dwelling 131 has the storage battery 16 with the charging level CL that is the charging allowance level, the storage battery 16 starts to be charged. When a dwelling 131 has the storage battery 16 with the charging level CL that is not the charging allowance level, the storage battery 16 is not charged. When it is determined to stop charging based on the charging stop condition, the charging of the storage battery 16 is stopped.

The charging time of the storage battery 16 of each dwelling 131 and the amount of the shared solar cell power MAA are managed by the power management device 101. The power management device 101 calculates the distributed amount of the electric power from the shared solar cell 104 to each dwelling 131 and a distributed ratio thereof.

The charging levels CL of the storage batteries 16 are different depending on the amounts of consumed powers MR by load appliances 5 and 6 of the respective dwellings 131. In a dwelling 131 involving a less amount of consumed power MR, the charging level CL is maintained at a high level for a long time.

In a dwelling 131 involving a greater amount of consumed power MR, the charging level CL is maintained at a high level for a reduced time. A dwelling 131 may be supplied with an electric power from the commercial AC power source 2, when there is a shortage of an electric power because an electric power is not supplied from the storage battery 16. Meanwhile, another dwelling 131 may not consume the charged power in the storage battery 16 and thus the storage battery has the charged power remaining. Accordingly, in order to effectively use the power accumulated in the storage batteries 16, the electric powers stored in the storage batteries 16 are interchanged between the dwellings 131.

An interchange of the electric powers stored in the storage batteries 16 between the dwellings 131 is carried out based on interchange conditions set for the respective dwellings 131. The interchange conditions include two conditions, such as a condition that the charging level CL of the storage battery 16 of one dwelling 131 is a dischargeable level and a condition that the charging level CL of the storage battery 16 of another dwelling 131 is a charging allowance level. When both conditions are satisfied, an electric power is discharged from the storage battery 16 with the charging level that is the dischargeable level to the power supply wiring 120. Further, the dischargeable level of the interchange conditions is set with different values for the dwellings 131.

Referring to Fig. 10, the interchange of an electric power between the dwellings 131 for one day will be described. Herein, the interchange of an electric power between dwellings D and E is described. The dwelling D has a surplus of shared solar cell power MAA. The dwelling E has consumed the entire shared solar cell power MAA and thus is supplied with an electric power from the commercial AC power source 2. In the dwellings D and E, the dischargeable levels of the storage batteries 16 are set to a threshold level CL2 or higher, and the charging allowance levels of the storage batteries 16 are set to be less than a threshold level CL2.

The amount of the shared solar cell power MAA increases in the daytime. The dwelling D is supplied with the shared solar cell power MAA from the shared solar cell battery 104 for a period A from time t21 to time t22 as the charging allowance condition is satisfied. When the charging level CL of the storage battery 16 reaches a full charge level CL1 at time t22 and the charging stop condition is satisfied, distribution of the shared solar cell power MAA from the shared solar cell 104 is stopped.

Here, since the charging level of the dwelling D exceeds the threshold level CL2, it is determined that the charging level is the dischargeable level, and accordingly a search for a dwelling 131 satisfying the other interchange condition is conducted. That is, the retrieval of a dwelling 131 having the storage battery 16 with the charging level CL that is the charging allowance level is carried out. When there exists such a dwelling, the interchange conditions are satisfied, and thus discharged power MD is supplied from the storage battery 16 of the dwelling D to the power supply wiring 120.

The dwelling E is supplied with the shared solar cell power MAA from the shared solar cell 104 for the period A and a period B from time t21 to time t23 as the charging allowance condition is satisfied. Since the dwelling E has an amount of consumed power MR greater than the dwelling D, an increase rate of the charging level CL is low. Therefore, the charging level CL of the storage battery 16 of the dwelling E does not reach the threshold level CL2 at time t22. Here, the dwelling E is at the charging allowance level. If there is a dwelling 131 at the dischargeable level, the dwelling E is supplied with an electric power from the corresponding dwelling 131. In Fig. 10, the dwelling D is at the dischargeable level, and thus the dwelling E is supplied with the electric power discharged from the storage battery 16 of the dwelling D.

The amounts of the shared solar cell power MAA distributed to the dwellings D and E are as follows.

The amount of the shared solar cell power MAA distributed to the dwelling D is a difference between the amount of the electric power distributed from the shared solar cell 104 for the period A and the amount of the discharged power MD at the time t22, as shown in Equation 3. The amount of the power distributed from the shared solar cell 104 for the period A is obtained by dividing the amount of the shared solar cell power MAA by the number N of the dwellings 131 receiving the same amount of distributed power for the period A. Since the number N changes with time, it is expressed by a function of time t.

The amount of the shared solar cell power MAA distributed to the dwelling E is the sum of the amount of the electric power from the shared solar cell 104 distributed to the dwelling E for the periods A and B and the amount of the electric power supplied from the dwelling D, as shown in Equation 4. The amount of the power supplied from the dwelling D is obtained by dividing the amount of the discharged power MD by the number Nx of dwellings 131 provided with the electric power from the dwelling D for the same periods.

The electricity billing rate of each dwelling 131 for the use of the shared solar cell power MAA is calculated by multiplying the distributed amount of the shared solar cell power MAA by the set price of the shared solar cell power MAA.

In the interchange of the electric power between the dwellings 131, a power trade process is conducted.

That is, each dwelling 131 calculates the amount of selling power MS based on the amount of power accumulated in the storage battery 16 and transmits to and receives from the power management device 101 selling power amount information indicating the amount of its selling power MS and purchasing power amount information indicating the amount of its purchasing power MT. The power management device 101 establishes a trade in an electric power based on the selling power amount information and the purchasing power amount information and records the amount of selling power MS, the amount of purchasing power MT, and the seller and the buyers of the electric power.

There is set a difference between the price of the shared solar cell power MAA and the price of the electric power from the commercial AC power source 2. For example, the price of the shared solar cell power MAA is set to be lower than that of the electric power from the commercial AC power source 2. Accordingly, the use of the shared solar cell power MAA is promoted.

However, frequent power trades via the storage batteries 16 may cause decrease in the life of the storage batteries 16 due to repeated charging and discharging. Therefore, the power management device 101 manages the number of discharging, the amount of discharged power, the discharging time, the number of charging, the amount of charged power, the charging time, the charging speed, and a variation in the charging speed of each storage battery 16. The power management device 101 calculates an estimated life span of the storage battery 16 of each dwelling 131 based on such data. The estimated life spans of the storage batteries 16 are displayed on the respective PC terminals 50 through the information network 110.

The power interchange system 100 in accordance with the second embodiment can provide the following effects in addition to the effect 1 provided by the first embodiment.
(7) In the present embodiment, the shared solar cell 104 is shared by the dwellings 131. The dwellings 131 include the respective storage batteries 16 for storing the electric powers distributed from the shared solar cell 104 and the respective battery chargers 51 for controlling charging the storage batteries 16 with the electric powers from the shared solar cell 104 and transmitting charging information on the control of charging. The power management device 101 manages the amounts of the powers distributed from the shared solar cell 104 to the storage batteries 16 of the dwellings 131 based on the charging information from the batter chargers 51.

with such configuration, since the power management device 101 manages the amounts of powers distributed from the shared solar cell 104 to the storage batteries 16 of the dwellings 131, the amount of power distributed to each dwelling 131 is clarified. Thus, a ratio between the amount of power distributed to each dwelling 131 and the amount of commercial AC power used by each dwelling 131 is clearly identified.
(8) In the present embodiment, each dwelling 131 includes the control unit 7 which calculates the amount of the selling power MS based on the amount of the electric power stored in the storage battery 16 and transmits to and receives from the power management device 101 the selling power amount information indicating the amount of selling power MS and the purchasing power amount information indicating the amount of the purchasing power MT. The electric management device 101 manages the charging level CL that is charging information from each battery charger 51, and the amount of selling power MS and the amount of purchasing power MT from each control unit 7.

With such configuration, since the power management device 101 manages the charging levels CL of the battery chargers 51 of the dwellings 131 and the amounts of the selling powers MS and the amounts of the purchasing powers MT thereof, it is possible to control the amount of power distributed to each dwelling 131 based on such information.
(9) In the present embodiment, the charging allowance condition for determining whether or not to allow charging from the shared solar cell 104 is set to the storage battery 16 of each dwelling 131. The power management device 101 allows the storage battery 16 to be charged when the storage battery 16 of the dwelling 131 satisfy the charging allowance condition.

With such configuration, the power generated from the shared solar cell 104 is not evenly distributed to the storage batteries 16 of the dwellings 131 but distributed limitedly to storage batteries 16 which satisfy the charging allowance conditions. Accordingly, as compared with when the generated power is uniformly distributed, unnecessary distribution of the power to a storage battery 16 which is not allowed to be charged is prevented.
(10) In the present embodiment, a selling allowance condition for determining whether or not to allow the sale of the electric power from the storage battery 16 to the power supply wiring 120 is set to the storage battery 16 of each dwelling 131. The power management device 101 allows the sale of the electric power from the storage battery 16 of a dwelling 131 when the corresponding storage battery 16 satisfies the selling allowance condition.

With such configuration, selling a power is allowed from a storage battery 16 which satisfies the selling allowance condition among the storage batteries 16 of the dwellings 131, whereas selling a power is not allowed from a storage battery 16 which does not satisfy the selling allowance condition. In this way, the sale of the power from the storage battery 16 of each dwelling 131 is managed, so that the charging level CL of the storage battery 16 of each dwelling 131 is properly identified.
(11) In the present embodiment, the power management device 101 manages the number of charging and discharging of the storage battery 16 of each dwelling 131 and calculates the life span of the storage battery 16 based on the number of the charging and discharging.

The abrasion of a storage battery 16 depends on how much it is used. With such configuration, the power management device 101 manages the numbers of the charging and discharging of the storage battery 16 of each dwelling 131 and calculates the life span of the storage battery 16, thus recognizing how much the storage battery 16 is worn out.

### (Other embodiments)

The present invention is not limited to the embodiments illustrated above. For example, the respective embodiments may be modified as follows. Further, a combination of the first embodiment and the second embodiment may be employed in the present invention. The following modifications are applied not only to the respective embodiments, but the modifications may be combined with each other.

In the first embodiment, the PC terminals 50 of the respective dwellings 131 are connected to the information network 110. Alternatively, the PC terminals 50 may be connected to respective control units 7, and information on the selling price of purchasing power Ct, selling power amount information, and purchasing power amount information may be displayed on the PC terminals 50.

In the first embodiment, the PC terminals 50 and the control units 7 of the respective dwellings 131, the shared storage battery 103, and the power management device 101 are connected through the information network 110. Alternatively, these devices may be configured to exchange information with each other via the Internet.

In the first embodiment, the price of power from the commercial AC power source 2 is set to a constant value. Alternatively, when there are different market prices for a power from the commercial AC power source 2, the price of the power may be set accordingly. For example, when the price of the power from the commercial AC power source 2 varies in the daytime and at night, the price of purchasing power Ct and the individual billing rate may be set accordingly.

In the first embodiment, the price of the selling power from the solar cell MSX is set to be lower than the price of the power generated by another power generation device. Alternatively, the prices may be set in the reverse way. When there is a high demand for a power from the solar cell, a trade in a power is realized even if the price of the selling power from the solar cell MSX is set to be higher than the price of the power generated by another power generation device. In this case, an investment in facilities for the solar cell 3 can be collected in a short time.

In the first embodiment, when selling a power, the power is discharged from the solar cell 3 to the power supply wiring 120. Instead, the same selling power MS may be discharged via the storage battery 16. With such configuration, since the storage battery 16 serves as a buffer, the selling power MS can be supplied to a purchaser with a more uniform power as compared with when the power is discharged directly from the solar cell 3.

In the first embodiment, the trade in a power is established whenever buying and selling of a power take place. Instead, the trade in a power may be conducted only at specific time. For example, the power trade may be performed at the time when the amount of a power generated by the solar cell 3 reaches the maximum level.

In the first embodiment, each dwelling 131 is provided with the solar cell 3 and the fuel cell 4. Alternatively, the multi-family house 130 includes a dwelling 131 provided with either one of the power generation devices or a dwelling 131 without any power generation device. The dwelling 131 without the power generation device cannot be a seller in trading power but can be a buyer.

In the first embodiment, the dwellings 131 do not share a power generation device. Alternatively, the dwellings 131 may have a shared solar cell 3 or shared fuel cell 4. The amount of power flowing from the shared solar cell 3 or shared fuel cell 4 to the power supply wiring 120 (hereinafter, "the amount of shared power") corresponds to the amount of input power MPin in Fig. 4. That is, the shared power may be treated as the selling power MS.

In the second embodiment, the electricity billing rate of each dwelling is calculated by multiplying the distributed amount of the shared solar cell power MAA by the set price of the shared solar cell power MAA. Instead, the electricity payment may be calculated as in the first embodiment. That is, the power management device 101 collects information on the amount of commercial AC power supplied from the power supply wiring 120 to the multi-family house 130, the amount of the selling power MS of each dwelling 131, and the amount of the purchasing power MT of each dwelling 131 and calculates the electricity billing rate of each dwelling 131 based on the amount of the commercial AC power MC, the amount of the selling power MS, and the amount of the purchasing power MT.

In the second embodiment, since the trade in a power enables the power accumulated in the storage battery 16 of one dwelling 131 to be re-distributed to another dwelling 131, an electric power is effectively used. Further, since the electricity billing rate of each dwelling 131 is calculated based on the amount of the commercial AC power, the amount of the selling power MS, and the amount of the purchasing power MT, a seller dwelling 131 can make a profit. Accordingly, re-distribution of the electric power can be promoted.

In the second embodiment, the dwellings 131 share the solar cell 104. Instead, the dwellings 131 may share a fuel cell. Further, the power generation device shared by the dwellings 131 is not limited to the solar cell 104 or the fuel cell.

In the second embodiment, the dwellings 131 are provided with the respective storage batteries 16. Alternatively, the storage batteries 16 may be managed by a manager of the multi-family house 130. In this case, the storage batteries 16 corresponding to the respective dwellings 131 are installed in the maintenance office of the multi-family house.

In the respective embodiments, the power management device 101 matches a buyer to a seller in the power trade and conducts the trade based on the information listed in the table. However, a seller, a buyer, and trade conditions may be preset in the power management device 101 to automatically conduct a trade in a power under such conditions.

In the respective embodiments, the present invention is applied to a mansion as an illustrative example of the multi-family house 130. That is, the present invention is applied to a group of power consuming dwellings, such as the mansion, provided with commercial AC power from the shared power supply wiring 120. For example, the present invention can be applied to a leased building or an industrial complex.

While the invention has been shown and described with respect to the embodiments, the present invention is not limited thereto. It will be understood by those skilled in the art that various changes and modifications may be made without departing from the scope of the invention as defined in the following claims.

## Claims

1. A power interchange system for interchanging an electric power, which is generated by a power generation device, between power consuming dwellings in a multi-family house,
wherein the respective power consuming dwellings generate respective electric powers by using the power generation devices and are supplied with a commercial AC power through a shared power supply wiring,
an amount of an electric power supplied to each power consuming dwelling is managed by a power management device, and
the power management device manages an amount of a surplus power of one power consuming dwelling and an amount of a required power of another power consuming dwelling and supplies the surplus power from the one power consuming dwelling to the another power consuming dwelling through the power supply wiring.

2. The power interchange system of claim 1, wherein an amount of an electric power sold by each power consuming dwelling is defined as a selling power amount, and an amount of an electric power required to be supplied from other power consuming dwellings to each power consuming dwelling is defined as a purchasing power amount,
each of the power consuming dwellings comprises the power generation device for generating the electric power and a power control unit calculating the selling power amount based on the amount of the electric power generated by the power generation device and transmitting to and receiving from the power management device selling power amount information indicating the selling power amount and purchasing power amount information indicating the purchasing power amount, and
the power management device establishes a trade in an electric power between the power consuming dwellings based on the selling power amount information and the purchasing power amount information; instructs a power consuming dwelling, which has transmitted the selling power amount information, to sell an electric power based on the established trade in the electric power; collects information on the amount of commercial AC power supplied from the power supply wiring to the multi-family house, the selling power amount of each power consuming dwelling, and the purchasing power amount of each power consuming dwelling; and calculates an electricity billing rate of each power consuming dwelling based on the amount of the commercial AC power, the selling power amount and the purchasing power amount.

3. The power interchange system of claim 2, wherein a current sensor detecting a flowing direction of the commercial AC power is provided between a downstream wiring of the power supply wiring inside the multi-family house and an upstream wiring thereof outside the multi-family house 130, and
the power management device distinguishes a used state of the commercial power from a non-used state of the commercial power, the non-used state of the commercial power being defined as a state in which the current sensor detects that there is no electric current flowing from the upstream wiring to the downstream wiring and the used state of the commercial power being defined as a state in which the current sensor detects that there is an electric current flowing from the upstream wiring to the downstream wiring and sets a difference between an electricity billing rate for an amount of an electric power used by each power consuming dwelling in the non-used state of the commercial power and an electricity billing rate for an amount of an electric power used by each power consuming dwelling in the used state of the commercial power.

4. The power interchange system of claim 2 or 3, wherein the power generation device includes a variety of kinds of power generation devices, and the power management device manages the selling power amount by distinguishing which of the power generation devices are used to generate the electric power.

5. The power interchange system of claim 4, wherein the electricity billing rate is changed depending on the kind of a power generation device that is a power source of the electric power sold when calculating the electricity bill of each power consuming dwelling based on the amount of the commercial AC power, the selling power amount, and the purchasing power amount.

6. The power interchange system of any one of claims 2 to 5, wherein each of the power consuming dwellings further comprises a display unit displaying an electricity billing rate for the commercial AC power and an electricity billing rate for the trade in the electric power.

7. The power interchange system of claim 1, wherein the power generation device is shared by the power consuming dwellings,
each of the power consuming dwellings comprises a storage battery charged with an electric power distributed from the power generation device and a battery charger charging the storage battery with the electric power from the power generation device and transmitting charging information for a charging control to the power management device, and
the power management device manages the amount of the electric power distributed from the power generation device to the storage battery of each power consuming dwelling based on the charging information from the battery charger.

8. The power interchange system of claim 7, wherein an amount of an electric power sold by each power consuming dwelling is defined as a selling power amount, and an amount of an electric power required to be supplied from other power consuming dwellings to each power consuming dwelling is defined as a purchasing power amount,
each of the power consuming dwellings comprises a power control unit calculating the selling power amount based on the amount of the electric power accumulated in the storage battery and transmitting to and receiving from the power management device selling power amount information indicating the selling power amount and purchasing power amount information indicating the purchasing power amount, and
the power management device manages a charging level that is the charging information from the battery charger, and the selling power amount and the purchasing power amount from the power control unit.

9. The power interchange system of claim 7 or 8, wherein a charging allowance condition determining whether or not to allow charging from the power generation device is set to the storage battery of each power consuming dwelling, and
the power management device allows the storage battery to be charged when the storage battery of the power consuming dwelling satisfies the charging allowance condition.

10. The power interchange system of claim 9, wherein a selling allowance condition determining whether or not to allow selling the electric power from the storage battery to the power supply wiring is set to the storage battery of each power consuming dwelling, and
the power management device allows selling the electric power from the storage battery when the corresponding storage battery of the power consuming dwelling satisfies the selling allowance condition.

11. The power interchange system of any one of claims 7 to 10, wherein the power management device manages the numbers of charging and discharging of the storage battery of each power consuming dwelling and calculates a life span of the storage battery based on the numbers of the charging and discharging.

12. The power interchange system of any one of claims 8 to 11, wherein the power management device establishes a trade in an electric power between power consuming dwellings based on the selling power amount information and the purchasing power amount information; instructs a power consuming dwelling, which has transmitted the selling power amount information, to sell an electric power based on the established trade in the electric power; collects information on the amount of commercial AC power supplied from the power supply wiring to the multi-family house, the selling power amount of each power consuming dwelling, and the purchasing power amount of each power consuming dwelling; and calculates an electricity billing rate of each power consuming dwelling based on the amount of the commercial AC power, the selling power amount, and the purchasing power amount.
